# EUROPEAN PATENT APPLICATION

(11) **EP 0 926 907 A1**
(43) Date of publication of application: **30.06.1999**
(21) Application number: 97204102.4
(22) Date of filing: 24.12.1997
(51) Int. Cl.: H04Q 3/00, H04Q 3/66

(54) **Controlling access to a telecommunications network in accordance with a selected quality of service**

(71) Applicant: TELEFONAKTIEBOLAGET L M ERICSSON (publ), 126 25 Stockholm (SE)
(72) Inventor: Van de Graaf, Willem, 4255 HL Nieuwendijk (NL)
(74) Representative: Dohmen, Johannes Maria Gerardus

(57) **Abstract**

A method of and equipment for controlling access to a telecommunciations network (10) wherein subscribers (11, 12, 13) of the telecommunications network (10) are provided with a network quality access right (33). Access to the network (10) is controlled from actual network quality of service (31; 37) by comparing the network quality access right (33) against the actual network quality of service (38).

## Description

### Field of the Invention

The present invention relates to telecommunication networks, in particular to public telecommunications networks, wherein telecommunication services are provided to a plurality of subscribers or users of a telecommunications network.

### Background of the Invention

Telecommunication networks, such as the Public Switched Telephone Network (PSTN), the Integrated Services Digital Network (ISDN) or the so-called Virtual Private Networks (VPN) are designed to provide a certain Grade Of Service (GOS) in terms of a blocking probability. That is, the probability that a subscriber meets congestion in the network, such that a call can not be established.

In order to guarantee a certain GOS, telecommunication networks have been designed for predetermined blocking percentages, for example 1% during the "busy hour".

With the increase of telecommunications traffic and services, such as calls from the PSTN to mobile networks operating under the Global System for Mobile communications (GSM), for example, fax and data transmissions, and the Internet, the traffic load profile of the Plain Old Telephone System (POTS) has changed over time.

In order to maintain a particular GOS, a POTS network operator has to increase network resources to cope with the increase in telecommunications traffic. On the other hand, during off-busy hour the network is scarcely loaded, leading to a none-productive over-capacity in the telecommunications network.

It is both in the interest of a network operator as well as the subscribers of a telecommunications network, to find an optimum between the GOS provided and the network resources required.

### Summary of the Invention

It is an object of the present invention to optimise the relation between Quality Of Service (QOS) and network resources in a telecommunications network.

This and other objects and advantages are provided by the present invention in a method of controlling access to a telecommunications network, wherein subscribers of the telecommunications network are provided with a network quality access right, and access to the network is controlled from actual network quality of service by comparing the network quality access right against the actual network quality of service.

The method according to the invention introduces a network quality access right, by which subscribers are able to select a QOS, different from the nominal QOS which is aimed at by the network operator. That is, a subscriber may avail himself of a lower QOS, for example less transmission capacity or reduced transmission bandwidth, in order to be able to establish a call even during network congestion, in order to avoid as much as possible call blocking.

The network quality access right provided may relate to several QOS issues in a telecommunications network including, but not limited to network congestion, reduced transmission capacity, reduced level of additional services involving scarce network resources such as Call Forwarding on Busy (CFB), use of network mailbox services and the like.

On the other hand, the network operator, with the network quality access right according to the present invention, receives a tool for dimensioning the telecommunications network such to reduce the unproductive network over-capacity.

In a further embodiment of the method according to the invention, levels and/or types of network quality and network quality access right have been defined, and wherein access to the telecommunications network is controlled if the actual network quality level is below a network quality access right level provided to a subscriber.

In the method according to the invention, the actual network quality level can be continuously calculated from network load measurements, for example. Network load measurement is a technique familiar to those skilled in the art.

In a preferred embodiment of the method according to the invention, the actual network quality level is calculated as a congestion probability level. That is, the probability of not being able to provide the nominal quality of service of the network. Such a congestion probability level can be calculated from the actual traffic or network load and historical traffic information, such as busy-hour, pre- and post busy hour traffic etc.

In order to reduce processing capacity, in a yet further embodiment of the method according to the invention, control of the access to a telecommunications network is initiated if the actual network quality drops below a predetermined level.

With the method according to the invention, it is feasible not only to control access to the network at call set-up but also during a call in progress, eventually resulting in termination of the call by the network to free network resources for subscribers requiring a higher level of network quality or even the nominal network quality.

In case of a termination, the method according to the invention provides a suitable signalling, such as an announcement that the call will be terminated from a certain point in time, for example.

To avoid termination or blocking of calls for lifeline purposes, i.e. police, fire brigades, ambulance etc., the method according to the invention is correspondingly arranged. Further, it can be provided to place calls of this type, regardless a particular network quality access right allocated to a subscriber or network terminal.

The network quality access right according to the invention can be allocated by a network operator and maintained thereby, or by a subscriber. For example, by preceeding a call by suitable signalling, such as a prefix, to be dialled or keyed in by the subscriber at call set-up.

In order to stimulate subscribers of using the network quality access right feature according to the present invention, network operators may offer reduced call charges in return to a particular network quality access right level, for example. Further network operators may offer lower subscription fees to subscribers to which a particular network quality access right is provided on a permanent basis.

The invention further relates to a telecommunications network, comprising telecommunication equipment for establishing calls between subscribers of the network, comprising network quality measuring means for measuring the actual network quality, means for allocating network quality access rights to subscribers of the network, means for evaluating the actual network quality against the network quality access rights, and means for controlling access to the network by subscribers and coupled to the evaluating means.

In a yet further embodiment of the system according to the invention, the network quality access right may not only be available in or from the network, but also from subscriber equipment connected to the network. That is, stored in the subscriber equipment or signalled therefrom at call set-up, such as a prefix disclosed above.

The above-mentioned and other features and advantages of the invention are, for a better understanding thereof, described in more detail in the following description with reference to the enclosed drawings.

### Brief Description of the Drawings

Figure 1 shows, for illustrative purposes, a graph of the number of calls in a telephone network versus the time of the day.
Figure 2 shows a simplified block diagram of a telecommunications system, incorporating the present invention.
Figure 3 shows a simplified flowchart diagram of an embodiment of the method according to the present invention.

### Detailed Description of the Embodiments

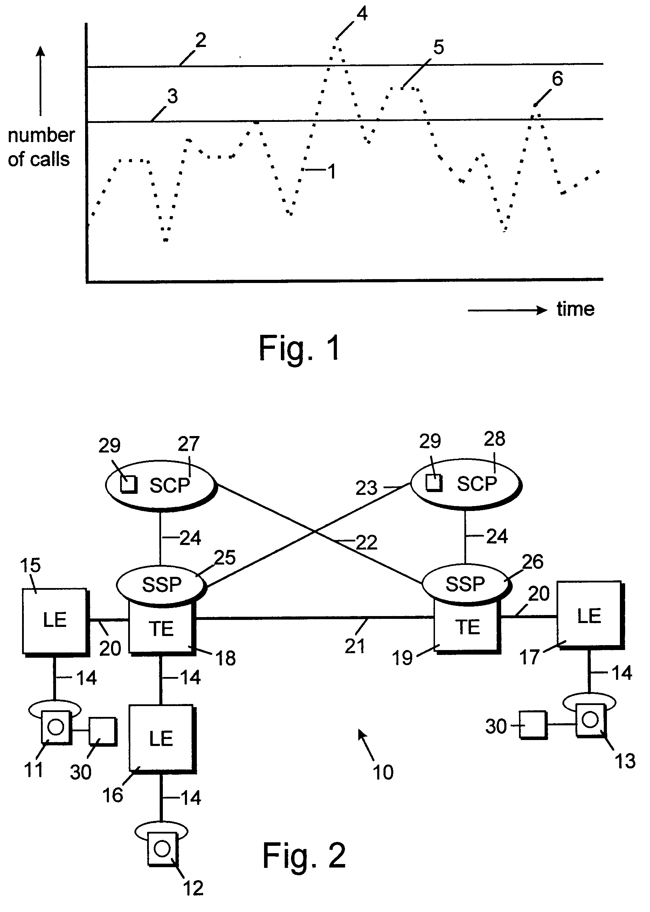

Figure 1 shows, for illustrative purposes, a graph 1 of the number of calls in a telecommunications network, such as the Public Switch Telephone Network (PSTN) versus the time of the day. Due to its illustrative nature, no explicit quantities are indicated.

Line 2 corresponds to a number of calls in the network, for which a predetermined or specified blocking percentage applies. Above this level, subscribers meet congestion. That is, the probability that a call can not be placed is above the designed or nominal value.

The vertical distance between the line 2 and the graph 1 is a measure of the spare network capacity or over-capacity, required for providing a desired Grade Of Service (GOS).

The Quality Of Service (QOS) provided to a subscriber by the network, is strongly related to the actual load of the network.

The QOS provided by a telecommunications network, as experienced by subscribers thereof, can be expressed not only in terms of call blocking percentages, but also with regard to the transmission capacity offered, i.e. the communication channel bandwidth or bit rate, call set-up time, the performance of call services provided by the network etc.

With the network quality access right according to the invention, the number of calls, the transmission capacity provided, the call services to be executed etc., can be controlled for individual subscribers or groups of subscribers of the network. This can be illustrated in an example with respect to figure 1.

Assume a subscriber is provided with a network quality access right corresponding to a QOS level below a designed or specified network quality level, for example. In figure 1 this can be illustrated by a line 3 below the line 2.

For subscribers having a network quality access right corresponding to line 3, if the load of the network is above the quantity corresponding to line 3, access to the network is provided in accordance with the particular network quality access right.

Network access control may range from blocking of the special network services, such as Call Forwarding (CF), reduced transmission or communication channel bandwidth, reduced data bit rates, increased call set-up times etc., and eventually complete blocking of the access to the network.

With regard to the latter, exemptions can be made for lifeline calls to the police station, the fire brigade, an ambulance or other emergency services, for example.

Those skilled in the art will appreciate that, if for particular subscribers access to the network is controlled, the QOS provided to subscribers without network quality access rights or network quality access rights corresponding to a more advanced level, will generally benefit. These subscribers can be better serviced, compared to a network without quality access control. In particular, during the time of the day wherein the demand on the network is very high, such as at busy-hour corresponding to the peak values 4, 5 and 6 of graph 1.

On the other hand, a subscriber having a network quality access right including less transmission bandwidth, for example, may benefit in that also during busy-hour still a call can be placed, i.e. access to the network is provided, however with less quality.

The network operator benefits from quality access right control in that the overall network spare capacity can be reduced, or, with the same amount of resources, for selected subscribers, the specified or nominal QOS can be provided without direct further investments in network equipment.

The network operator may offer benefits like reduced subscription fees and/or reduced call charging rates to those subscribers accepting a less QOS, for example.

Figure 2 shows a typical Intelligent Network (IN) telecommunications system 10, illustrative for a PSTN. Subscribers or users 11, 12, 13 connect by a subscriber or drop line 14 to a Local Exchange (LE) 15, 16, 17, respectively. The LE 15, 16, 17 connect by trunk lines 20 to a Trunk Exchange (TE) 18, 19, as shown. The TE 18, 19 connect by a trunk line 21.

Following modern IN-switching equipment, the TE 18, 19 are of the type comprising Service Switching Point (SSP) equipment 25, 26, respectively. The SSP 25, 26 control the associated TE 18, 19 in order to establish the required transmission channels for exchanging calls by the subscribers 11, 12, 13.

To each of the SSP 25, 26 Service Control Point (SCP) equipment associates, i.e. SCP 27, 28, respectively. The SCP operate for controlling telecommunication network services offered to the subscribers.

For signalling purposes, a signalling network is provided, schematically indicated by signalling links 22, 23, 24 between the SCP and SSP. The signalling network, although not explicitly illustrated, operates down to the subscribers 11, 12, 13 via the trunk and drop lines.

In an IN-network 10 shown, the method according to the invention can be implemented in the SCP equipment 27, 28, as generally indicated by blocks 29.

The blocks 29 are operative to measure and calculate actual network quality levels; to allocate network quality access rights to subscribers and/or to calls from subscribers; to evaluate network access quality rights against actual network quality levels; and to control access to the network of subscribers c.q. calls, in accordance with the applicable quality access rights and actual network quality of service.

Those skilled in the art will appreciate that the operation of the blocks 29, as disclosed above, can be implemented by software and hardware components and using the resources already available in modern SCP.

Those skilled in the art will appreciate that call load measurements may also be provided in the SSP 25, 26 and/or the LE 15, 16, 17.

Call charging or subscription incentives to users accepting a certain level of network quality access right associated with a service quality less than for which the network has been specified or designed, can be exchanged between SCP 27, 28 and SSP 25, 26 through the signalling network 22, 23, 24 following established rules and procedures.

Network quality access right information, in accordance with the invention, may also be stored in the equipment of the subscribers 11, 12, 13 which, for this purpose, have to be provided with suitable storage and retrieval means, as indicated by blocks 30.

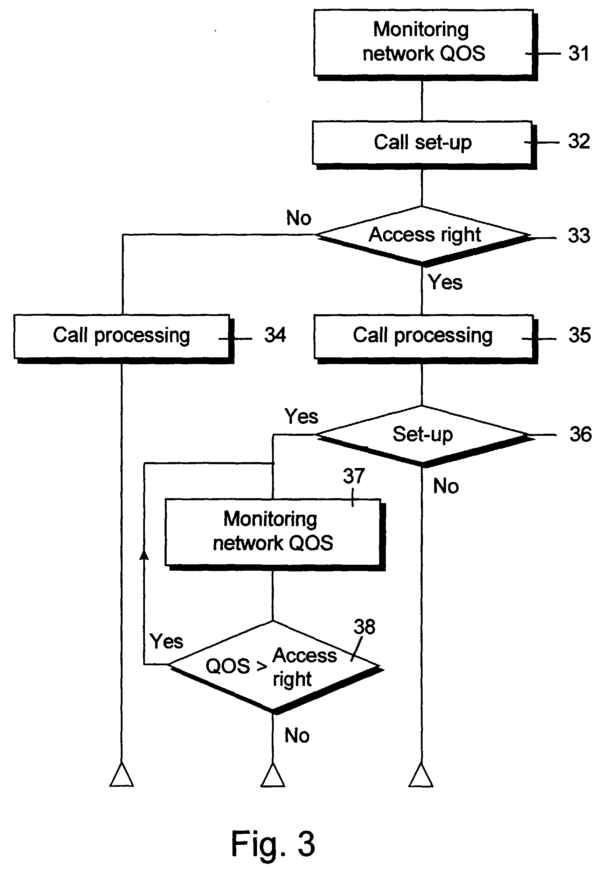

An embodiment of the method according to the invention is now illustrated in connection with figure 3, which shows a flowchart diagram. Normal flow is assumed from the top of the chart to the bottom thereof.

Block 31 discloses continuously monitoring of the quality of service of the network. Monitoring can be based on several network parameters, among which actual call load, call set-up times, call blocking, historical traffic data etc.

Block 32 assumes call set-up by a subscriber, such as the subscribers 11, 12, 13 in figure 2.

Block 33 is a decision block, in which is tested whether the call has to be processed in accordance with a particular network quality access right. A network quality access right can be retrieved from an inquiry of the SCP to which the subscriber is allocated, that is system block 29 thereof. A quality of service access right may also be signalled from the subscriber at call set-up 32. This, for example, in that the subscriber has dialled or keyed in a particular prefix before the subscriber number of the called party or other suitable signalling, such as special function keys and the like.

In the absence of a quality of service access right the call will be processed following established call set-up procedures, indicated by block 34, i.e. corresponding to decision "no" of block 33.

However, in the case of call set-up following a network quality access right, i.e. decision "yes" of block 33, the call will be processed in accordance with the particular network quality access right, as shown by block 35.

Decision block 36 tests whether the call has been set-up. If "yes", it is tested by block 38, whether the network quality access right meets the actual network quality monitored by block 37. If not, i.e. decision "no", the call is terminated. That is, if the actual network quality level drops below the level corresponding to the network quality access right of the subscriber, the call will be terminated.

Termination of a call can be preceeded by proper announcements or other suitable signalling. Special calls, like calls to emergency services, may not be terminated or restricted to network control access, such as to be incorporated in the system block 29, for example.

Instead of termination of the call, same may be further processed in accordance with an applicable network quality access right, for example.

The invention is not limited or restricted to the embodiments described and shown in a PSTN. The invention may also be applied to a Virtual Private Network (VPN), for example. Various modifications and additions can be made within the scope of the invention as defined in the attached claims.

## Claims

1. A method of controlling access to a telecommunciations network, characterized in that subscribers of said telecommunications network are provided with a network quality access right, wherein access to said network is controlled from actual network quality of service by comparing said network quality access right against said actual network quality of service.

2. A method according to claim 1, wherein levels and/or types of network quality and network quality access right have been defined, and wherein access to the telecommunications network is controlled if the actual network quality level is below a network quality access right level provided to a subscriber.

3. A method according to claim 2, wherein the actual network quality level is continuously calculated from network load measurements.

4. A method according to claim 2 or 3, wherein the actual network quality level is calculated as a congestion probability level.

5. A method according to any of the previous claims wherein control of the access to a telecommunications network is initiated if the actual network quality drops below a predetermined level.

6. A method according to any of the previous claims, wherein access to the telecommunications network is controlled from the start of and during a call in progress, such that if the actual network quality level drops below the network quality access right level provided to a subscriber, a call in progress is terminated by the telecommunications network.

7. A method according to claim 6, wherein termination of a call in progress is preceeded by an appropriate signal and/or announcement.

8. A method according to any of the previous claims, wherein subscribers are offered reduced call charges in return to a network quality access right corresponding to a lower quality of service.

9. A method according to any of the previous claims, wherein subscribers are offered reduced subscription fees in return to a network quality access right corresponding to a lower quality of service.

10. A method according to any of the previous claims, wherein said network quality access right is provided by a subscriber at call set-up, such as a prefix signal.

11. A method according to any of the previous claims, wherein said network quality access right is fixedly provided in subscriber terminal equipment.

12. A method according to any of the previous claims, wherein said network access control following a network quality access right is disabled for access to specified subscribers.

13. A telecommunications network, comprising telecommunication equipment for establishing calls between subscribers of said network, characterized by network quality measuring means for measuring the actual network quality, means for allocating network quality access rights to subscribers of said network, means for evaluating said actual network quality against said network quality access rights, and means for controlling access to said network by subscribers and coupled to said evaluating means.

14. A telecommunication terminal device, comprising means for providing a network quality access right for use with a method and telecommunications network according to any of the previous claims.
